# EUROPÄISCHE PATENTSCHRIFT

(11) **EP 1 053 547 B1**
(45) Veröffentlichungstag und Bekanntmachung des Hinweises auf die Patenterteilung: **14.11.2001**
(21) Anmeldenummer: 99908744.8
(22) Anmeldetag: 22.01.1999
(51) Int. Cl.: G11B 19/12

(54) **WIEDERGABEVORRICHTUNG FÜR PLATTENFÖRMIGE AUFZEICHNUNGSTRÄGER**
PLAYBACK DEVICE FOR DISC-SHAPED RECORDING MEDIA
DISPOSITIF DE REPRODUCTION POUR SUPPORTS D'ENREGISTREMENTS EN FORME DE DISQUE

(30) Priorität: 05.02.1998 DE 19804541
(43) Veröffentlichungstag der Anmeldung: 22.11.2000
(73) Patentinhaber: ROBERT BOSCH GMBH, 70442 Stuttgart (DE)
(72) Erfinder: MAIER, Jens, D-31180 Giesen (DE); ZIMMERMANN, Holger, D-31141 Hildesheim (DE)
(86) Internationale Anmeldenummer: DE9900148
(87) Internationale Veröffentlichungsnummer: WO9940582

(56) Entgegenhaltungen:
- EP-A- 0 453 108
- EP-A- 0 724 263
- US-A- 5 428 592
- PATENT ABSTRACTS OF JAPAN vol. 096, no. 006, 28. Juni 1996 & JP 08 036829 A (NIPPON COLUMBIA CO LTD), 6. Februar 1996
- PATENT ABSTRACTS OF JAPAN vol. 098, no. 003, 27. Februar 1998 & JP 09 306088 A (AIWA CO LTD), 28. November 1997

## Beschreibung

### Stand der Technik

Die Erfindung geht von einer Wiedergabevorrichtung für plattenförmige Aufzeichnungsträger nach der Gattung des Hauptanspruchs aus.

Aus der EP 0 453 108 B1 ist bereits ein Plattenspieler für eine Tonplatte und eine Speicherplatte bekannt, der in der Lage ist, sowohl eine Audioplatte als auch eine Speicherplatte abzuspielen. Der Plattenspieler umfaßt eine Abtastvorrichtung und eine Auswertevorrichtung zur Bestimmung, ob eine Platte eine Audioplatte oder eine Speicherplatte ist. Der Plattenspieler umfaßt außerdem Mittel zum Beginn des Abspielens von Musik eines vorgegebenen Musikstückes, wenn die Auswertevorrichtung die Platte als eine Audioplatte erkennt. Die Mittel dienen außerdem zum Setzen eines Pausenmodus, wenn die Auswertevorrichtung die Platte als Speicherplatte erkennt. Die Entscheidung der Auswertevorrichtung, ob es sich bei der Platte um eine Audioplatte oder eine Speicherplatte handelt, basiert auf Informationen, die aus einem Einlaufbereich auf der Platte ausgelesen werden.

### Vorteile der Erfindung

Die erfindungsgemäße Wiedergabevorrichtung mit den Merkmalen des Hauptanspruchs hat demgegenüber den Vorteil, daß auch auf einer Audioplatte aufgezeichnete Speicherdatengruppen von der Auswertevorrichtung aufgrund von auf der Audioplatte aufgezeichneten Zusatzinformationen erkannt und von der Abtastvorrichtung übersprungen werden. Auf diese Weise wird ein Rauschen verursachendes Abspielen von Speicherdatengruppen auf Audioplatten verhindert und zudem die für dieses Abspielen erforderliche Zeit eingespart. Somit wird der Hörgenuß für den Benutzer nicht durch störendes und zeitraubendes Abspielen von Speicherdatengruppen beeinträchtigt. Es erfolgt also durch die erfindungsgemäße Wiedergabevorrichtung ein schnellerer Zugriff auf die eigentlichen Audiodatengruppen, die für die Wiedergabe bestimmt sind.

Durch die in den Unteransprüchen aufgeführten Maßnahmen sind vorteilhafte Weiterbildungen und Verbesserungen der im Hauptanspruch angegebenen Wiedergabevorrichtung möglich.

Dabei ist es besonders vorteilhaft, daß eine Speicherdatengruppe durch ein binäres Zeichen am Anfang der zu dieser Speicherdatengruppe aufgezeichneten codierten Zusatzinformationen gekennzeichnet ist und daß die Auswertevorrichtung eine Speicherdatengruppe nach Auswertung des binären Zeichens erkennt. Auf diese Weise lassen sich gerade abgetastete Speicherdatengruppen besonders schnell erkennen und überspringen. Dadurch wird der durch Abtastung einer Speicherdatengruppe sich ergebende Zeitverlust weiter reduziert.

Ein weiterer Vorteil besteht darin, daß die Auswertevorrichtung einen Aufzeichnungsträger als Audioplatte erkennt, wenn mindestens eine Audiodatengruppe auf dem Aufzeichnungsträger aufgezeichnet ist. Auf diese Weise wird verhindert, daß das Abspielen von Aufzeichnungsträgern mit nur verhältnismäßig geringem Anteil an Audiodaten von der Wiedergabevorrichtung verweigert wird.

Ein weiterer Vorteil besteht darin, daß für den Fall, daß die Auswertevorrichtung einen Aufzeichnungsträger als Speicherplatte erkennt, ein Antriebsmotor zum rotatorischen Antrieb des Aufzeichnungsträgers abschaltet und die Abtastvorrichtung in eine Ausgangsposition zurückfährt. Auf diese Weise wird Energie eingespart, da ein Abspielen der Speicherplatte durch die Wiedergabevorrichtung nicht erforderlich ist. Außerdem erkennt der Benutzer dadurch, daß der eingelegte Aufzeichnungsträger von der Wiedergabevorrichtung nicht akzeptiert wird.

Ein weiterer Vorteil besteht darin, daß für den Fall, daß die Auswertevorrichtung einen Aufzeichnungsträger als Speicherplatte erkennt, zusätzlich ein Ausschub des Aufzeichnungsträgers aus der Wiedergabevorrichtung erfolgt. Auf diese Weise wird dem Benutzer noch deutlicher die Ablehnung des eingelegten Aufzeichnungsträgers durch die Wiedergabevorrichtung signalisiert und der Bedienkomfort erhöht, da der Benutzer ohne weitere Bedienvorgänge den Aufzeichnungsträger gleich aus der Wiedergabevorrichtung entnehmen kann.

### Zeichnung

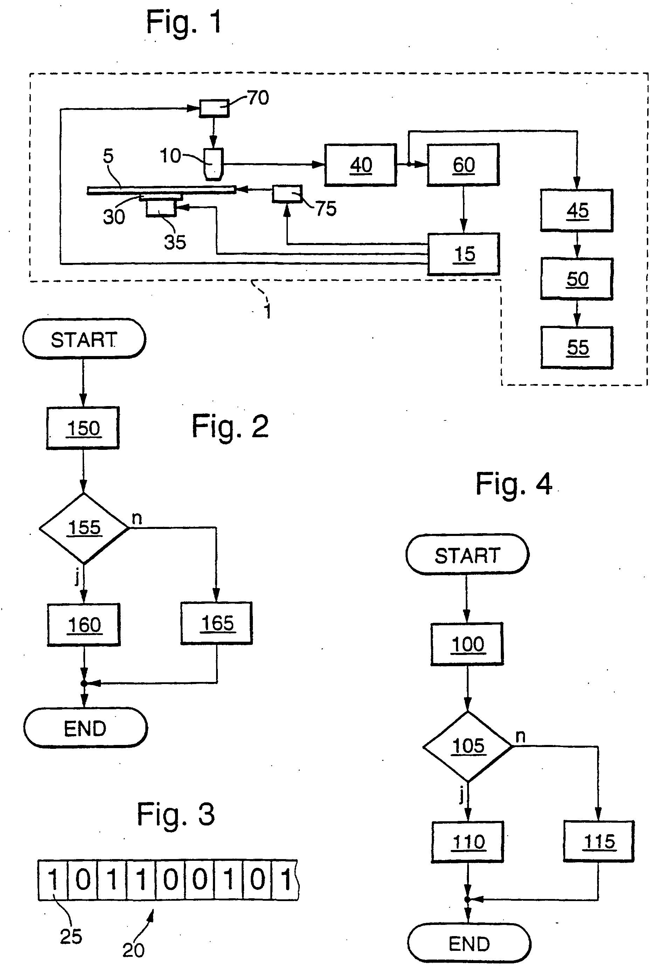

Ein Ausführungsbeispiel der Erfindung ist in der Zeichnung dargestellt und in der nachfolgenden Beschreibung näher erläutert. Es zeigen Figur 1 ein Blockschaltbild einer erfindungsgemäßen Wiedergabevorrichtung, Figur 2 und Figur 4 je einen Ablaufplan für die Funktionsweise einer in der Wiedergabevorrichtung angeordneten Auswertevorrichtung und Figur 3 den Beginn von einer Datengruppe zugeordneten und auf dem Aufzeichnungsträger aufgezeichneten codierten Zusatzinformationen.

### Beschreibung des Ausführungsbeispiels

In Figur 1 kennzeichnet 1 eine beispielsweise als Compact-Disc-Spieler ausgebildete Wiedergabevorrichtung für plattenförmige Aufzeichnungsträger. Ein in die Wiedergabevorrichtung 1 eingelegter plattenförmiger Aufzeichnungsträger 5 liegt auf einem Plattenteller 30 auf, der von einem Antriebsmotor 35 rotatorisch angetrieben werden kann. Bei dem plattenförmigen Aufzeichnungsträger 5 kann es sich um eine Audioplatte oder eine Speicherplatte handeln. Unter einer Audioplatte ist dabei ein Aufzeichnungsträger zu verstehen, auf dem Audiosignale zur akustischen Wiedergabe aufgezeichnet sind. Dies kann beispielsweise eine Compact-Disc mit aufgezeichneten Musiktiteln sein. Handelt es sich bei dem Aufzeichnungsträger 5 um eine Speicherplatte, so kann dies beispielsweise eine CD-ROM sein. Die Daten sind dabei in Form von einzelnen Datengruppen oder Titeln auf dem plattenförmigen Aufzeichnungsträger 5 aufgezeichnet, wobei es sich im Falle einer Audioplatte um Audiodatengruppen und im Falle einer Speicherplatte um Speicherdatengruppen handelt. Die Wiedergabevorrichtung 1 umfaßt eine Abtastvorrichtung 10 zur Abtastung von auf einem in die Wiedergabevorrichtung 1 eingelegten Aufzeichnungsträger 5 aufgezeichneten Daten. Bei den beispielhaft genannten Aufzeichnungsträgern handelt es sich um optische Platten mit digital aufgezeichneten Daten, so daß für diesen Fall die Abtastvorrichtung 10 einen eingelegten Aufzeichnungsträger 5 mittels eines Laserstrahls in einer dem Fachmann bekannten Weise abtasten kann. Der plattenförmige Aufzeichnungsträger 5 weist dabei einen Einlaufbereich auf, der zu Beginn von der Abtastvorrichtung 10 abgetastet wird und Inhaltsdaten enthält, die Angaben über die auf dem Aufzeichnungsträger 5 abgespeicherten Datengruppen machen.

Die von der Abtastvorrichtung 10 abgetasteten Aufzeichnungen des Aufzeichnungsträgers 5 werden einem Demodulator 40 zugeführt und dort demoduliert. Anschließend erfolgt eine Fehlerkorrektur in einem Fehlerkorrekturnetzwerk 45 und eine Digital-/Analogwandlung der fehlerkorrigierten Daten in einem Digital-/Analog-Wandler 50. Die Analogdaten werden dann einem Audioausgang 55 zugeführt, von dem sie gegebenenfalls nach weiterer Vorverarbeitung einer akustischen Wiedergabe, beispielsweise einem Lautsprecher zugeführt werden können. Die vom Demodulator 40 demodulierten abgetasteten Daten des Aufzeichnungsträgers 5 werden außerdem einem Decoder 60 zugeführt, der abgetastete Inhaltsdaten und codierte Zusatzinformationen des Aufzeichnungsträgers 5 decodiert und einer Auswertevorrichtung 15 zuführt. Die Auswertevorrichtung 15 wiederum steuert den Antriebsmotor 35, eine Positioniervorrichtung 70 und eine Ausschubvorrichtung 75 an. Die Positioniervorrichtung 70 dient der Positionierung der Abtastvorrichtung 10 im Bereich des Aufzeichnungsträgers 5 und die Ausschubvorrichtung 75 dient einem Ausschub eines beispielsweise über einen Eingabeschacht in die Wiedergabevorrichtung 1 eingelegten Aufzeichnungsträgers 5 aus diesem Eingabeschacht zur Entnahme des Aufzeichnungsträgers 5 aus der Wiedergabevorrichtung 1.

Nach Eingabe des Aufzeichnungsträgers 5 in den Eingabeschacht der Wiedergabevorrichtung 1 und Einstellen eines Abspielmodus durch den Benutzer an einer in Figur 1 nicht dargestellten Eingabeeinheit wird die Abtastvorrichtung 10 durch die Positioniervorrichtung 70 in den Einlaufbereich des Aufzeichnungsträgers 5 bewegt. Dort werden von der Abtastvorrichtung 10 die Inhaltsdaten abgetastet und über den Demodulator 40 dem Decoder 60 zugeführt. Die Inhaltsdaten liegen dabei in Form eines sogenannten Subcodes im Einlaufbereich des Aufzeichnungsträgers 5 vor. Die Inhaltsdaten im Einlaufbereich des Aufzeichnungsträgers 5 stellen ein Inhaltsverzeichnis der auf dem Aufzeichnungsträger 5 aufgezeichneten Titel bzw. Datengruppen dar. Jeder Datengruppe ist dabei im Einlaufbereich des Aufzeichnungsträgers 5 mindestens eine Bitfolge 20 gemäß Figur 3 zugeordnet, die die Anfangsadresse der Datengruppe auf dem Aufzeichnungsträger 5 und gegebenenfalls weitere, die zugehörige auf dem Aufzeichnungsträger 5 aufgezeichneten Datengruppe betreffende Informationen, wie beispielsweise die Abspielzeit umfaßt. Dabei ist jeder Bitfolge 20 ein Kontroll-Bit 25 vorangestellt, das die zugehörige Datengruppe als Audiodatengruppe oder als Speicherdatengruppe kennzeichnet. So ist durch ein mit einer logischen Eins wie in Figur 3 gesetztes Kontroll-Bit 25 der Bitfolge 20 die zugehörige Datengruppe beispielsweise als Speicherdatengruppe gekennzeichnet. Eine Audiodatengruppe ist dann durch eine logische Null des Kontroll-Bits 25 gekennzeichnet. Der Decoder 60 decodiert die abgetasteten Bitfolgen 20 und übermittelt die decodierten Informationen der Auswertevorrichtung 15. Die Auswertevorrichtung 15 prüft, ob mindestens eine Audiodatengruppe auf dem Aufzeichnungsträger 5 aufgezeichnet ist und erkennt in diesem Fall den Aufzeichnungsträger 5 als Audioplatte. Andernfalls wird der Aufzeichnungsträger 5 als Speicherplatte erkannt. Wird der Aufzeichnungsträger 5 als Audioplatte erkannt, so wird der Abspielvorgang fortgesetzt und die Positioniervorrichtung 70 positioniert die Abtastvorrichtung 10 am Anfang eines beispielsweise durch Programmierung vorgegebenen Titels. Ist der Aufzeichnungsträger 5 als Speicherplatte erkannt worden, so führt die Positioniervorrichtung 70 die Abtastvorrichtung 10 in eine.Ausgangsposition zurück. Außerdem wird der Antriebsmotor 35 abgestellt, so daß die Rotation des Aufzeichnungsträgers 5 beendet wird. Zusätzlich kann durch die Ausschubvorrichtung 75 ein Ausschub des Aufzeichnungsträgers 5 aus dem Eingabeschacht der Wiedergabevorrichtung 1 bewirkt werden, so daß der Benutzer den Aufzeichnungsträger 5 aus der Wiedergabevorrichtung 1 entnehmen kann. Gemäß Figur 4 ist ein Ablaufplan dargestellt, der die Funktionsweise der Auswertevorrichtung 15 bei der Auswertung der Inhaltsdaten beschreibt. Bei einem Programmpunkt 100 werden die decodierten Inhaltsdaten der Auswertevorrichtung 15 zugeführt. Bei Programmpunkt 105 prüft die Auswertevorrichtung 15, ob alle Kontroll-Bits 25 der Bitfolgen 20 auf eine logische Eins gesetzt sind. Ist dies der Fall, so wird zu Programmpunkt 110 verzweigt, andernfalls wird zu Programmpunkt 115 verzweigt. Bei Programmpunkt 110 veranlaßt die Auswertevorrichtung 15 die Positioniervorrichtung 70 zur Rücksetzung der Abtastvorrichtung 10 in die Ausgangsposition. Außerdem veranlaßt die Auswertevorrichtung 15 den Antriebsmotor 35 zum Abschalten. Zusätzlich kann vorgesehen sein, daß die Auswertevorrichtung 15 bei Programmpunkt 110 auch die Ausschubvorrichtung 75 dazu veranlaßt, den Aufzeichnungsträger 5 aus dem Eingabeschacht der Wiedergabevorrichtung 1 zur Entnahme auszuschieben. Bei Programmpunkt 110 hat die Auswertevorrichtung 15 den Aufzeichnungsträger 5 also als Speicherplatte erkannt. Bei Programmpunkt 115 hat die Auswertevorrichtung 15 den Aufzeichnungsträger 5 als Audioplatte erkannt und veranlaßt die Positioniervorrichtung 70, die Abtastvorrichtung 10 auf den gerade adressierten Titel der Audioplatte zu positionieren. Dies kann beispielsweise ein vom Benutzer an der in Figur 1 nicht dargestellten Eingabeeinheit programmierter Titel oder der dem Einlaufbereich nächstliegend aufgezeichnete Titel des Aufzeichnungsträgers 5 sein. Anschließend wird dieser Titel abgespielt. Nach Programmpunkt 110 bzw. nach Programmpunkt 115 wird das Programm verlassen.

Für den Fall, daß von der Auswertevorrichtung 15 ein in die Wiedergabevorrichtung 1 eingelegter Aufzeichnungsträger 5 als Speicherplatte erkannt wurde, wird der Abspielvorgang abgebrochen. Wurde der Aufzeichnungsträger 5 als Audioplatte erkannt, so wird der Abspielvorgang fortgesetzt. Ein als Audioplatte erkannter Aufzeichnungsträger 5 kann dennoch Speicherdatengruppen umfassen. Den Datengruppen des Aufzeichnungsträgers 5 sind codierte Zusatzinformationen ebenfalls in Form jeweils einer Bitfolge 20 gemäß Figur 3 zugeordnet und zusammen mit der zugeordneten Datengruppe auf dem Aufzeichnungsträger 5 aufgezeichnet. Dabei kann auch wieder das erste Bit der jeweiligen Bitfolge 20 als Kontroll-Bit 25 fungieren und die zugehörige Datengruppe als Speicherdatengruppe oder als Audiodatengruppe kennzeichnen. Dabei kann wiederum ein auf logisch Eins gesetztes Kontroll-Bit 25 die zugeordnete Datengruppe als Speicherdatengruppe und ein auf Null gesetztes Kontroll-Bit 25 die zugeordnete Datengruppe als Audiodatengruppe kennzeichnen. Die codierten Zusatzinformationen 20 sind dabei zumindest am Anfang des jeweiligen Titels auf dem Aufzeichnungsträger 5 aufgezeichnet. Sie werden ebenfalls dem Decoder 60 zugeführt und nach Decodierung in der Auswertevorrichtung 15 ausgewertet. Die codierten Zusatzinformationen 20 können jedoch zusätzlich auch innerhalb der zugeordneten Datengruppe mehrfach angeordnet sein. Wird die Abtastvorrichtung 10 durch die Positioniervorrichtung 70 daher an einen beliebigen Titelanfang oder eine beliebige Stelle innerhalb einer Datengruppe positioniert, so kann ohne größeren Zeitverlust die zugehörige Bitfolge 20 dem Decoder 60 zugeführt, vom Decoder 60 decodiert und der Auswertevorrichtung 15 zugeführt werden.

Gemäß Figur 2 ist ein Ablaufplan dargestellt, der die Funktionsweise der Auswertevorrichtung 15 für die Auswertung solcher den Datengruppen zugeordneter Bitfolgen 20 beschreibt. Bei einem Programmpunkt 150 wird die entsprechende, einer Datengruppe zugeordnete Bitfolge 20 nach Decodierung durch den Decoder 60 der Auswertevorrichtung 15 zugeführt. Bei einem Programmpunkt 155 wird geprüft, ob das Kontroll-Bit 25 auf eine logische Eins gesetzt ist. Ist dies der Fall, so wird zu Programmpunkt 160 verzweigt, andernfalls wird zu Programmpunkt 165 verzweigt. Bei Programmpunkt 160 veranlaßt die Auswertevörrichtung 15 die Positioniervorrichtung 70, den aktuellen Titel bzw. die aktuelle Datengruppe zu überspringen und die Abtastvorrichtung 10 auf den Anfang eines anderen Titels bzw. einer anderen Datengruppe zu positionieren, wobei dieser Titel beispielsweise durch Programmierung an der in Figur 1 nicht dargestellten Eingabeeinheit durch den Benutzer vorgegeben sein kann oder der nachfolgend auf dem Aufzeichnungsträger 5 aufgezeichnete Titel sein kann. Bei Programmpunkt 160 wurde jedenfalls die aktuell abgetastete Datengruppe als Speicherdatengruppe erkannt. Bei Programmpunkt 165 wird die aktuell abgetastete Datengruppe als Audiodatengruppe erkannt und abgespielt. Nach Programmpunkt 160 bzw. nach Programmpunkt 165 wird das Programm jeweils verlassen.

Durch das Überspringen von Speicherdatengruppen auf Audioplatten wird sowohl der Hörgenuß für den Benutzer nicht beeinträchtigt als auch die Zeit zum Abspielen der Speicherdatengruppe eingespart. Somit ist ein schnellerer Zugriff auf die eigentlichen Audiodatengruppen möglich.

Es sind als Compact-Discs ausgebildete Aufzeichnungsträger 5 bekannt, die in einer Pause vor dem ersten Titel mindestens eine Speicherdatengruppe umfassen. Diese Datengruppen sind dabei dem ersten Titel zugeordnet und daher nicht separat mit codierten Zusatzinformationen gekennzeichnet und daher nicht von der Auswertevorrichtung 15 erkennbar. Da jedoch die Inhaltsdaten im Einlaufbereich der Compact-Disc 5 als Adressen der einzelnen Titel deren Anfangszeiten enthalten, werden die Speicherdatengruppen in der Pause vor dem ersten Titel automatisch von der Abtastvorrichtung 10 übersprungen, da die Anfangsadressen direkt den jeweiligen Titelanfang unter Ausschluß der vorherigen Pause kennzeichnen. Somit wird auch bei solchen Compact-Discs 5 eine Beeinträchtigung des Hörgenusses durch die als Rauschen wahrnehmbare akustische Wiedergabe der Speicherdatengruppen für den Benutzer und der damit verbundene Zeitverlust bis zum Abspielen des ersten Titels vermieden.

Audioplatten mit Speicherdatengruppen und Audiodatengruppen sind beispielsweise als sogenannte Mix-Mode-CD's bekannt.

Dadurch daß das Kontroll-Bit 25 sowohl bei den Inhaltsdaten als auch bei den codierten Zusatzinformationen jeweils am Anfang der entsprechenden Bitfolge steht, ist eine besonders schnelle Erkennung eines Aufzeichnungsträgers 5 als Speicherplatte bzw. einer Datengruppe als Speicherdatengruppe möglich, da dieses Kontroll-Bit 25 bei sequentieller Verarbeitung durch die Auswertevorrichtung 15 als erstes ausgewertet wird.

## Patentansprüche

1. Wiedergabevorrichtung (1) für plattenförmige Aufzeichnungsträger (5) mit einer Abtastvorrichtung (10) und einer Vorrichtung (15) zur Auswertung von auf dem Aufzeichnungsträger (5) in einem Einlaufbereich aufgezeichneten Inhaltsdaten zu Beginn eines Abspielvorgangs, wobei in Abhängigkeit der Auswertung der Inhaltsdaten ein in die Wiedergabevorrichtung (1) eingelegter Aufzeichnungsträger (5) als Speicherplatte oder als Audioplatte erkannt wird, daß für den Fall der Erkennung einer Speicherplatte der Abspielvorgang beendet wird und für den Fall der Erkennung einer Audioplatte ein Sprung der Abtastvorrichtung (10) auf einen gerade adressierten Titel der Audioplatte erfolgt, **dadurch gekennzeichnet, daß** die Abtastvorrichtung (10) beim Abspielen eines Titels der Audioplatte zu diesem Titel aufgezeichnete codierte Zusatzinformationsdaten (20) abtastet, daß die Auswertevorrichtung (15) an Hand der Zusatzinformationen (20) erkennt, ob es sich bei dem gerade abgespielten Titel um eine Audiodatengruppe oder eine Speicherdatengruppe handelt und daß für den Fall der Erkennung einer Speicherdatengruppe ein Sprung der Abtastvorrichtung (10) auf einen anderen Titel erfolgt.

2. Wiedergabevorrichtung (1) nach Anspruch 1, **dadurch gekennzeichnet, daß** eine Speicherdatengruppe durch ein binäres Zeichen (25) am Anfang der zu dieser Speicherdatengruppe aufgezeichneten codierten Zusatzinformationen (20) **gekennzeichnet ist** und daß die Auswertevorrichtung (15) eine Speicherdatengruppe nach Auswertung des binären Zeichens (25) erkennt.

3. Wiedergabevorrichtung nach Anspruch 1 oder 2, **dadurch gekennzeichnet, daß** die Auswertevorrichtung (15) einen Aufzeichnungsträger (5) als Audioplatte erkennt, wenn mindestens eine Audiodatengruppe auf dem Aufzeichnungsträger (5) aufgezeichnet ist.

4. Wiedergabevorrichtung nach Anspruch 1, 2 oder 3, **dadurch gekennzeichnet, daß** für den Fall, daß die Auswertevorrichtung (15) einen Aufzeichnungsträger (5) als Speicherplatte erkennt, ein Antriebsmotor (35) zum rotatorischen Antrieb des Aufzeichnungsträgers (5) abschaltet und die Abtastvorrichtung (10) in eine Ausgangsposition zurückfährt.

5. Wiedergabevorrichtung nach Anspruch 4, **dadurch gekennzeichnet, daß** ein Ausschub des Aufzeichnungsträgers (5) aus der Wiedergabevorrichtung (1) erfolgt.

## Claims

1. Reproduction device (1) for disc-type recording media (5) having a scanning device (10) and a device (15) for evaluating content data at the beginning of a playback operation, the said content data being recorded on the recording medium (5) in a lead-in region, in which case, depending on the evaluation of the content data, a recording medium (5) which is inserted into the reproduction device (1) is identified as a storage disc or as an audio disc, in which case, in the event of a storage disc being identified, the playback operation is ended and, in the event of an audio disc being identified, the scanning device (10) jumps to a currently addressed title of the audio disc, **characterized in that**, during the playback of a title of the audio disc, the scanning device (10) scans coded additional information data (20) recorded with respect to this title, **in that** the evaluation device (15) uses the additional information (20) to identify whether the title that is currently being played back involves an audio data group or a storage data group, and **in that**, in the event of a storage data group being identified, the scanning device (10) jumps to a different title.

2. Reproduction device (1) according to Claim 1, **characterized in that** a storage data group is **characterized by** a binary character (25) at the start of the coded additional information (20) recorded with respect to this storage data group, and in that the evaluation device (15) identifies a storage data group after evaluation of the binary character (25).

3. Reproduction device according to Claim 1 or 2, **characterized in that** the evaluation device (15) identifies a recording medium (5) as an audio disc if at least one audio data group is recorded on the recording medium (5).

4. Reproduction device according to Claim 1, 2 or 3, **characterized in that**, in the event that the evaluation device (15) identifies a recording medium (5) as a storage disc, a drive motor (35) for the rotary drive of the recording medium (5) switches off and the scanning device (10) returns to a starting position.

5. Reproduction device according to Claim 4, **characterized in that** the recording medium (5) is ejected from the reproduction device (1).

## Revendications

1. Dispositif de reproduction (1) pour un support d'enregistrements (5) en forme de disque comprenant un dispositif de détection (tête de lecture) (10) et un dispositif (15) pour exploiter les données de contenu enregistrées par le support d'enregistrements (5) dans une zone d'entrée, dans lequel au début d'une opération de lecture, et en fonction de l'exploitation des données du contenu, on reconnaît un support d'enregistrements (5) placé dans le dispositif de reproduction (1) comme disque mémoire ou comme disque audio, et au cas où un disque mémoire est reconnu, on termine l'opération de lecture, alors qu'au cas où un disque audio est reconnu, on fait un saut avec le dispositif de détection (10) sur un titre qui vient d'être adressé, du disque audio,
**caractérisé en ce qu'**
à la lecture d'un titre du disque audio le dispositif de détection (10) détecte les données d'informations complémentaires (20), codées, enregistrées pour ce titre, le dispositif d'exploitation (15) reconnaît à l'aide des informations complémentaires (20) si le titre en cours de lecture correspond à un groupe de données audio ou s'il s'agit d'un groupe de données de mémoire, et lorsqu'un groupe de données de mémoire est reconnu, il commande un saut du dispositif de détection (10) vers un autre titre.

2. Dispositif de reproduction (1) selon la revendication 1,
**caractérisé en ce qu'**
un groupe de données de mémoire est **caractérisé par** un signe binaire (25) au début des informations complémentaires (20), codées, enregistrées pour ce groupe de données de mémoire, et le dispositif d'exploitation (15) reconnaît un groupe de données de mémoire après exploitation du signe binaire (25).

3. Dispositif de reproduction selon les revendications 1 ou 2,
**caractérisé en ce que**
le dispositif d'exploitation (15) reconnaît comme disque audio un support d'enregistrements (5) si au moins un groupe de données audio est enregistré sur le support d'enregistrements (5).

4. Dispositif de reproduction selon les revendications 1, 2 ou 3,
**caractérisé en ce qu'**
au cas où le dispositif d'exploitation (15) reconnaît un support d'enregistrements (5) comme disque de mémoire, il coupe le moteur (35) entraînant en rotation le support d'enregistrements (5) et reconduit le dispositif de lecture (10) dans sa position de départ.

5. Dispositif de reproduction selon la revendication 4,
**caractérisé par**
l'éjection du support d'enregistrements (5) du dispositif de reproduction (1).
